## Europäisches Patentamt
## European Patent Office
## Office européen des brevets

(19)

(11) Veröffentlichungsnummer: **0 225 447**
**B1**

(12) # EUROPÄISCHE PATENTSCHRIFT

(45) Veröffentlichungstag der Patentschrift:
**31.01.90**

(21) Anmeldenummer: **86113878.2**

(22) Anmeldetag: **07.10.86**

(51) Int. Cl.⁴: **C08F 220/12**, C09D 127/06,
C09D 131/04, C09D 133/08

(54) Verfahren zur Herstellung wässriger hochviskoser Dispersionen von Polymerisaten olefinisch ungesättigter Carbonsäureester.

(30) Priorität: **11.10.85 DE 3536264**

(43) Veröffentlichungstag der Anmeldung:
**16.06.87 Patentblatt 87/25**

(45) Bekanntmachung des Hinweises auf die Patenterteilung:
**31.01.90 Patentblatt 90/5**

(84) Benannte Vertragsstaaten:
**AT BE CH DE FR GB IT LI NL SE**

(56) Entgegenhaltungen:
**DE-A- 2 059 800**
**FR-A- 1 444 302**
**FR-A- 2 207 150**

(73) Patentinhaber: **BASF Aktiengesellschaft,
Carl-Bosch-Strasse 38, D-6700 Ludwigshafen(DE)**

(72) Erfinder: **Grubert, Heinrich, Dr., Hahnbergweg 21/1,
D-6900 Heidelberg(DE)**
Erfinder: **Mueller, Dietrich-Wolfgang, Dr., Hasenhain 11,
D-6901 Dossenheim(DE)**
Erfinder: **Wolf, Hans, Dr., Dubliner Strasse 1,
D-6700 Ludwigshafen(DE)**
Erfinder: **Peters, Karl-Clemens, Dr.,
Otto-Schmidt-Gross-Strasse 4, D-6702 Bad
Duerkheim(DE)**

ACTORUM AG

**Beschreibung**

Gegenstand dieser Erfindung ist ein Verfahren zur Herstellung wäßriger, verhältnismäßig viskoser bis hochviskoser Polymerisat-Dispersionen mit hoher Fließgrenze und niedriger Filmwasseraufnahme auf Basis von Vinylestern und gegebenenfalls Acrylestern.

Die Emulsionspolymerisation von Vinylestern, wie besonders Vinylacetat, ist in einer Vielzahl von Literaturstellen beschrieben. Ein besonders vorteilhaftes Verfahren ist z.B. aus der DE-AS 2 256 154 bekannt, bei dem monoolefinisch ungesättigte Carbonsäureester, d.h. Vinylester wie Vinylacetat und/oder Acrylester, wie Butylacrylat in wäßriger Emulsion unter Verwendung der üblichen Polymerisationsinitiatoren und, bezogen auf die Gesamtmonomeren, 0,5 bis 7 Gew.-% nichtionischen Emulgatoren, 0,05 bis 5 Gew.-% anionischen Emulgatoren, 0,01 bis 5 Gew.-% eines Schutzkolloids auf Basis eines N-Vinylpyrrolidon-Polymerisats und 0,01 bis 7 Gew.-% Polyvinylalkoholen zu wasserlöslichen teilverseiften Vinylacetat-Polymerisaten polymerisiert werden. Dabei wird bevorzugt nach dem Monomeren-Emulsions-Zulaufverfahren gearbeitet und eine wäßrige Phase vorgelegt, in der gegebenenfalls bis 10 Gew.-% eines der Emulgatoren und/oder ein Anteil des Schutzkolloids gelöst ist.

Die erhaltenen Copolymerisat-Dispersionen sind hochviskos und haben eine niedrige Fließgrenze (fließen vom Glasstab). Außderdem zeigen Filme, die aus diesen Dispersionen hergestellt sind, nach DIN 53 495 eine Wasseraufnahme von weit über 20 %.

Aufgabe der vorliegenden Erfindung ist nun ein Verfahren zur Herstellung von verhältnismäßig viskos bis hochviskosen Dispersionen, die sowohl hohe Fließgrenzen aufweisen als auch Filme ergeben, die eine besonders niedrige Wasseraufnahme zeigen (von weniger als 20 % nach DIN 53 495 und die sich wegen dieser Eigenschaften besonders gut als Bindemittel für Anstrichmittel für den Vollwärmeschutz sowie für Putze und Spachtelmassen eignen.

Diese Aufgabe wird durch das vorliegende Verfahren zur Herstellung von hochviskosen wäßrigen Dispersionen von Copolymerisaten olefinisch ungesättigter Carbonsäureester dadurch gelöst, daß man monoolefinisch ungesättigter Carbonsäureester mit 0,1 bis 1,5 Gew.-%, bezogen auf die gesamten Monomeren, eine Sulfonatgruppe enthaltenden monoolefinisch ungesättigten Monomeren in wäßriger Emulsion in Gegenwart von zusammen 0,3 bis 3,0 Gew.-%, bezogen auf die Monomeren, eines mindestens 40 % seines Gewichts Vinylpyrrolidon einpolymerisiert enthaltenden Polymerisats und Polyvinylalkohol als Schutzkolloide, von 1 bis 3 Gew.-%, bezogen auf die Monomeren, eines sulfatierten und mit 20 bis 30 Mol Ethylenoxid alkoxilierten $C_8$-$C_{12}$-Alkylphenols als Emulgator, von dem sich 10 bis 40 % bei Beginn der Polymerisation in einer wäßrigen Vorlage befinden, und von wasserlöslichen radikalbildenden Polymerisationsinitiatoren sowie in Gegenwart von 0,001 bis 0,2 Gew.-%, bezogen auf die Monomeren, von üblichen Reglern, die mindestens zur Hälfte in der Vorlage vorgelegt werden, bei erhöhter Temperatur, wobei die Hauptmenge der Monomeren dem Polymerisationsgemisch nach Maßgabe ihres Verbrauchs als wäßrige Emulsion zugegeben wird, bei pH-Werten unter 6 und Einstellen des pH-Wertes der erhaltenen Polymerisat-Dispersion über 6 polymerisiert, wobei man als Comonomere zusätzlich zu den Sulfonatgruppen enthaltenden Monomeren ausschließlich ein Gemisch aus jeweils 28 bis 40 Gew.-%, bezogen auf die gesamten Monomeren, Vinylchlorid, Vinylacetat und n-Butylacrylat einsetzt und in Abwesenheit von nicht ionischen Emulgatoren polymerisiert.

Als Comonomere müssen bei dem neuen Verfahren 0,1 bis 1,5, vorzugsweise 0,5 bis 1, bezogen auf die gesamten Monomeren, Sulfonatgruppen enthaltende monoolefinisch ungesättigte Monomere mitverwendet werden. Beispiele hierfür sind besonders Vinylsulfonsäure und deren wasserlösliche Salze, wie besonders deren Natriumsalz, sowie β-Sulfoethylmethacrylat, γ-Sulfopropylacrylat und -methacrylat und 2-Acrylamido-2-methylpropansulfonsäure und deren Natriumsalze. Durch das Einpolymerisieren der Sulfonatgruppen enthaltenden Monomeren steigt die Fließgrenze der Dispersionen überraschenderweise deutlich an, wenn auch die Wasseraufnahme der Filme unwesentlich zunimmt.

Bei der praktischen Durchführung des neuen Verfahrens werden die Mengen an Monomeren und an wäßriger Phase derart gewählt, daß Polymerisat-Dispersionen erhalten werden, deren Feststoffgehalt im allgemeinen 30 bis 70 Gew.-%, insbesondere 40 bis 60 Gew.-% beträgt.

Die geeigneten Vinylpyrrolidonpolymerisate enthalten vorzugsweise mehr als 60 % ihres Gewichts an Vinylpyrrolidon einpolymerisiert und weisen im allgemeinen K-Werte, gemessen nach DIN 53 726 in 0,1-%iger wäßriger Lösung bei 20°C, im Bereich von 50 bis 120, vorzugsweise von 60 bis 100 auf. Als Comonomere enthalten sie oft Acrylamid und/oder Methacrylamid sowie ferner niedere Acrylester, wie Methylacrylat und n-Butylacrylat einpolymerisiert.

Als Polyvinylalkohole kommen die als Schutzkolloide für die Emulsionspolymerisation des Vinylacetats üblichen Produkte, die im Handel erhältlich sind, in Frage. Sie weisen im allgemeinen folgende charakteristischen Kenngrößen auf:

Der Anteil an Polyvinylalkohol an dem Schutzkolloidgemisch liegt meist zwischen 50 und 98 Gew.-%, vorzugsweise zwischen 80 und 95 Gew.-%.

Bei der praktischen Durchführung der erfindungsgemäßen Emulsionspolymerisation können in manchen Fällen auch im allgemeinen mindestens 50 % der insgesamt eingesetzten Schutzkolloidmenge in der wäßrigen Vorlage, vorgelegt werden, wobei vorzugsweise die gesamte Schutzkolloidmenge in der Vorlage eingesetzt wird. Die restliche Menge des Schutzkolloids kann gegebenenfalls zusammen mit den Monomeren zu der auf Polymerisationstemperatur erwärmten wäßrigen Vorlage zugefahren werden, wobei in üblicher Weise anpolymerisiert und dann die restlichen Monomeren in ihrer Hauptmenge nach Maßgabe ihres Verbrauchs zugegeben werden können. Dabei werden die Monomeren vorzugsweise in Form einer wäßrigen Emulsion zu der Vorlage gegeben, doch ist es auch möglich, die Monomeren für sich zuzufahren.

Als Emulgatoren werden bei dem neuen Verfahren 1 bis 3 Gew.-%, vorzugsweise 1,5 bis 2,5 Gew.-%, bezogen auf die Monomeren, sulfatierte und mit 20 bis 30 mol Ethylenoxid alkoxilierte $C_8$-$C_{12}$-Alkylphenole eingesetzt. Die genannten Ethoxylierungsprodukte haben 10 bis 40, vorzugsweise 15 bis 30, Ethylenoxidreste, die Alkylgruppen der Alkylphenole bevorzugt 8 bis 9 C-Atome.

Die Emulgatoren werden in einem Anteil von 10 bis 40 % in der wäßrigen Vorlage vorgelegt, der Rest gegebenenfalls zusammen mit den Monomeren (Emulsionszulauf) während der Polymerisation zugefahren.

Schließlich werden bei dem neuen Verfahren zusätzlich noch 0,001 bis 0,2 Gew.-%, bezogen auf die Monomeren, eines üblichern Reglers mitverwendet, von dem mindestens die Hälfte in der wäßrigen Vorlage vorgelegt und der Rest, gegebenenfalls zusammen mit den Monomeren, während der Polymerisation zugegeben wird. Die Menge des Reglers beträgt vorzugsweise 0,01 bis 0,1 Gew.-%. Als Regler kommen z.B. Merkaptane, wie besonders Tertiärdodecylmerkaptan, sowie Buten-2-ol, Hydroxylamin und dessen Derivate und Hydrazin und dessen Derivate in Frage. Auch wasserlösliche Regler, wie Thioglykolsäure sind geeignet. Durch die Regler wird überraschenderweise die Fließgrenze der Dispersion deutlich erhöht. Der pH-Wert liegt bei dem neuen Verfahren während der Polymerisation unter 6 und man erhält nach Abschluß der Polymerisation Polymerisat-Dispersionen, deren pH-Wert dementsprechend unter 6 liegt. Da diese bei der Lagerung im allgemeinen gelieren, wird der pH-Wert nach Abschluß der Polymerisation, im allgemeinen nach dem Abkühlen der erhaltenen Polymerisat-Dispersion, durch Zugabe von z.B. wäßrigem Ammoniak oder Natriumhydroxydlösung auf einen Wert über 6 gestellt, um das Gelieren zu verhindern. Er kann, falls gewünscht, für die Verarbeitung durch Zugabe verdünnter Säuren wieder auf einen pH-Wert unter 6 gestellt werden.

Als wasserlösliche radikalbildende Polymerisationsinitiatoren kommen die hierfür üblichen Peroxide, Perborate usw. in Frage. Genannt seien vor allem Kaliumpersulfat, Natriumpersulfat, Ammoniumpersulfat und Wasserstoffperoxid. Auch übliche Redoxkatalysatoren, z.B. Gemische aus Wasserstoffperoxid und Natriumhydrogensulfit, Natriumformaldehydsulfoxilat oder Ascorbinsäure können eingesetzt werden.

Schließlich können aus den erhaltenen Polymerisatdispersionen restliche Monomere in an sich üblicher Weise, z.B. durch Wasserdampfdestillation oder Strippen sowie die üblichen Nachpolymerisationsmethoden entfernt werden.

Die Emulsionspolymerisation kann sonst in an sich üblicher Weise durchgeführt werden, wobei im allgemeinen Polymerisationstemperaturen von 40 bis 100, vorzugsweise von 50 bis 90°C angewandt werden. Von den Monomeren können im allgemeinen zum Anfahren der Polymerisation bis zu 25 % der Gesamtmenge vorgelegt werden, doch reichen im allgemeinen Mengen von 2 bis 10, insbesondere von 5 bis 7 % aus.

Nach dem neuen Verfahren erhält man mittel- bis hochviskose wäßrige Polymerisat-Dispersionen mit hoher Fließgrenze, die Filme ergeben, deren Wasseraufnahme nach DIN 53 495 besonders gering ist und unter 20 Gew.-% liegt. (Die Dispersionen weisen im allgemeinen Viskositäten von 1 bis 4 Pa.s auf und haben eine hohe Fließgrenze von 100 bis 600 · $10^{-4}$mN/mm², d.h. sie fließen nicht vom Glasstab.) Die Kombination dieser Eigenschaften ist überraschend, da im allgemeinen Filme von Polymerisat-Dispersionen, die unter Zusatz von Polyvinylpyrrolidon hergestellt sind, eine höhere Wasseraufnahme aufweisen als solche, die aus Dispersionen erhalten wurden, zu deren Herstellung Polyvinylalkohol eingesetzt wurden.

Die in den folgenden Beispielen genannten Teile und Prozente beziehen sich auf das Gewicht. Die darin angegebenen Wasseraufnahmen von Polymerisat-Filmen wurden nach DIN 53 495 bestimmt.

Beispiele 1 bis 6

| Beispiele 1 bis 6 | | |
| --- | --- | --- |
| Rezeptur | | |
| Vorlage | 0,0005 | Teile FeSO$_4$·5H$_2$O |
| | 1,0 | Teile Polyvinylalkohol + Vinylpyrrolidoncopolymerisat |
| | 0,4 | Teile Na-Salz von mit 25 Mol Ethylenoxid ethoxiliertem sulfatiertem Octylphenol |
| | 0,05 | Teile t-Dodecylmerkaptan |
| | 35,00 | Teile Wasser |
| | 0,06 | Teile K$_2$S$_2$O$_8$ |

| Zulauf 1 | 40,00 | Teile Vinylacetat |
| --- | --- | --- |
| | 30,00 | Teile Vinylchlorid |
| | 30,00 | Teile n-Butylacrylat |
| | 1,86 | Teile Na-Salz von mit 25 Mol Ethylenoxid ethoxiliertem sulfatiertem p-Octylphenol |
| | 0,50 | Teile Na-Vinylsulfonat |
| | 49,00 | Teile Wasser |

| Zulauf 2 | | | |
| --- | --- | --- | --- |
| (a) | 0,216 | Teile $K_2S_2O_8$ |
| | 9,000 | Teile Wasser |
| (b) | 0,045 | Teile $K_2S_2O_8$ |
| | 1,000 | Teile Wasser |

| Zulauf 3 | | |
| --- | --- | --- |
| (a) | 0,0045 | Teile Natriumformaldehydsulfoxilat |
| | 0,1250 | Teile Natriumacetat |
| | 8,0000 | Teile Wasser |
| (b) | 0,0018 | Teile Natriumformaldehydsulfoxilat |
| | 0,0273 | Teile Natriumacetat |
| | 2,0000 | Teile Wasser |

| Ausbeute | Gut 200 Teile Dispersion eines Feststoffgehalts von 50±1 Gew.-%. |
| --- | --- |

Als Polyvinylalkohol wird ein Polyvinylalkohol mit 8 % Restacetylgruppen nach DIN 53015 verwendet, dessen 4 %ige wäßrige Lösung bei 20°C eine Viskosität von 30 ± 2,0 Centipoise aufweist.

Das verwendete Vinylpyrrolidoncopolymerisat hat 70 % seines Gewichts Vinylpyrrolidon und 30 % seines Gewichts Methacrylamid einpolymerisiert und als 1 %ige wäßrige Lösung im Fordbecher (4 mm Düse) eine Auslaufzeit von 70 bis 100 sec.

Die in den Beispielen 1 bis 6 eingesetzten Mengen der Schutzkolloide sind in der folgenden Tabelle 1 angegeben.

Tabelle 1

Beispiel

| Tabelle 1 | | | | | | |
| --- | --- | --- | --- | --- | --- | --- |
| Beispiel | | | | | | |
| Schutzkolloid | 1 | 2 | 3 | 4 | 5 | 6 |
| | Teile | Teile | Teile | Teile | Teile | Teile |
| Polyvinylalkohol | 0,98 | 0,80 | 0,60 | 0,40 | 0,20 | 0,02 |
| Vinylpyrrolidonmischpolymerisat | 0,02 | 0,20 | 0,40 | 0,60 | 0,80 | 0,98 |

Fahrweise:

In einem Rührkessel wird die Vorlage ohne Kaliumpersulfat auf 73°C geheizt und darauf das Kaliumpersulfat zugegeben. Nach 2 Minuten werden 5 % von Zulauf 1 und 5 % von Zulauf 3(a) vorgelegt und 15 Minuten anpolymerisiert. Dann wird der Rest von Zulauf 1, Zulauf 2(a) und der Rest von Zulauf 3(a) in 4 1/2 Stunden zugefahren (von Zulauf 2(a) und Restzulauf 3(a) werden in den ersten 1 1/2 Stunden 20 % und in den folgenden 3 Stunden die restlichen 80 % zugefahren). Nach Beendigung von Zulauf 1 wird gewartet, bis der Druck deutlich abfällt. Darauf wird Zulauf 2(b) in 1/2 Stunde und Zulauf 3(b) in 1 Stunde zugefahren und gleichzeitig auf 85°C geheizt. Anschließend wird gekühlt. Falls gewünscht, werden vor oder nach dem Kühlen die Restmonomeren in üblicher Weise entfernt. Zuletzt wird mit konz. NH$_3$-Lösung pH 8-9 eingestellt.

Alle 6 Dispersionen sind hochviskos, haben hohe Fließgrenzen (fließen nicht vom Glasstab) und zeigen nach DIN 53495 Filmwasseraufnahmen um 15 %. Die einzelnen Werte sind in der folgenden Tabelle 2 zusammengestellt.

Tabelle 2

| Beispiel | Viskosität (Pa·s) | Fließgrenze (mN/mm$^2$) | Filmwasser-aufnahme (%) | Filmbild-temperatur (°C) |
|---|---|---|---|---|
| 1 | 1,45 | 157,8 ·10$^{-4}$ | 15 | 20 |
| 2 | 1,60 | 180,5 ·10$^{-4}$ | 14 | 19 |
| 3 | 1,78 | 267,4 ·10$^{-4}$ | 15 | 19 |
| 4 | 2,53 | 443,3 ·10$^{-4}$ | 17 | 19 |
| 5 | 2,37 | 456,3 ·10$^{-4}$ | 16 | 18 |
| 6 | 2,19 | 383,6 ·10$^{-4}$ | 15 | 18 |

## Patentansprüche

1. Verfahren zur Herstellung von hochviskosen wäßrigen Dispersionen von Copolymerisaten olefinisch ungesättigter Carbonsäureester durch Copolymerisation monoolefinisch ungesättigter Carbonsäureester mit 0,1 bis 1,5 Gew.%, bezogen auf die gesamten Monomeren, eine Sulfonatgruppe enthaltenden monoolefinisch ungesättigten Monomeren in wäßriger Emulsion in Gegenwart von zusammen 0,3 bis 3,0 Gew.%, bezogen auf die Monomeren, eines mindestens 40 % seines Gewichts Vinylpyrrolidon einpolymerisiert enthaltenden Polymerisats und Polyvinylalkohol als Schutzkolloide, von 1 bis 3 Gew.-%, bezogen auf die Monomeren, eines sulfatierten und mit 20 bis 30 Mol Ethylenoxid alkoxilierten C$_8$-C$_{12}$-Alkylphenols als Emulgator, von dem sich 10 bis 40 % bei Beginn der Polymerisation in einer wäßrigen Vorlage befinden, und von wasserlöslichen radikalbildenden Polymerisationsinitiatoren sowie in Gegenwart von 0,001 bis 0,2 Gew.-%, bezogen auf die Monomeren, von üblichen Reglern, die mindestens zur Hälfte in der Vorlage vorgelegt werden, bei erhöhter Temperatur, wobei die Hauptmenge der Monomeren dem Polymerisationsgemisch nach Maßgabe ihres Verbrauchs als wäßrige Emulsion zugegeben wird bei pH-Werten unter 6 und Einstellen des pH-Werts der erhaltenen Polymerisat-Dispersion über 6, dadurch gekennzeichnet, daß man als Comonomere zusätzlich zu den Sulfonatgruppen enthaltenden Monomeren ausschließlich ein Gemisch aus jeweils 28 bis 40 Gew.%, bezogen auf die gesamten Monomeren, Vinylchlorid, Vinylacetat und n-Butylacrylat einsetzt und in Abwesenheit von nicht ionischen Emulgatoren polymerisiert.

2. Verwendung der nach den Anspruch 1 hergestellten Polymerisat-Dispersionen als Bindemittel für Anstrichmittel, Putze und Spachtelmassen.

## Claims

1. A process for preparing a highly viscous aqueous dispersion of a copolymer of an olefinically unsaturated carboxylic ester by copolymerization of a monoolefinically unsaturated carboxylic ester with from 0.1 to 1.5% by weight, based on the total monomers, of a sulfonato-containing monoolefinically unsaturated monomer in an aqueous emulsion in the presence of in total from 0.3 to 3.0% by weight, based on the monomers, of a polymer containing not less than 40% of its weight of vinylpyrrolidone as copolymerized units and polyvinyl alcohol as protective colloids, from 1 to 3% by weight, based on the monomers, of a sulfated C$_8$-C$_{12}$-alkylphenol alkoxylated with from 20 to 30 moles of ethylene oxide, as emulsifier, of which from 10 to 40% are present in the initial aqueous charge at the start of the polymerization, and of a water-soluble free radical polymerization initiator, and also in the presence of from 0.001 to 0.2% by weight, based on the monomers, of a customary regulator, of which not less than half is present in the initial charge, at elevated temperature, the bulk of the monomers being added to the polymerization mixture as an aqueous emulsion at their rate of consumption, and at a pH below 6 and adjustment of the pH of the resulting polymer dispersion to above 6, which comprises using as a comonomer in addition to the sulfonato-containing monomer exclusively a mixture of 28–40% by weight, based on the total monomers, of each of vinyl chloride, vinyl acetate and n-butyl acrylate and polymerizing in the absence of any nonionic emulsifiers.

2. The use of a polymer dispersion prepared as claimed in claim 1, as a binder for paints, renders and mortars.

**Revendications**

1. Procédé de préparation de dispersions aqueuses de copolymères d'esters d'acides carboxyliques à insaturation oléfinique, fortement visqueuses, par la copolymérisation d'esters d'acides carboxyliques à insaturation monooléfinique avec de 0,1 à 1,5% en poids, rapportés aux monomères totaux, d'un monomère à insaturation monooléfinique et contenant des radicaux sulfonate, en émulsion aqueuse, en présence, d'au total, 0,3 à 3,0% en poids, rapportés aux monomères, d'un polymère contenant au moins 40% de son poids de vinylpyrrolidone, incorporés par polymérisation et d'alcool polyvinylique, à titre de colloïdes protecteurs, de 1 à 3% en poids, par rapport aux monomères, d'un alkylphénol en $C_8$ à $C_{12}$, sulfaté et alcoxylé avec de 20 à 30 moles d'oxyde d'éthylène, servant d'émulsif, dont de 10 à 40% se trouvent dans une masse aqueuse au début de la polymérisation et d'amorceurs de polymérisation radicalogènes, solubles dans l'eau, comme aussi en présence de 0,01 à 0,2% en poids, rapportés aux monomères, de régulateurs usuels, que l'on peut introduire, au moins pour moitié, au préalable dans la masse aqueuse, à température élevée, où la proportion principale des monomères s'ajoute au mélange de polymérisation sous forme d'émulsion aqueuse, au fur et à mesure de sa consommation, sous des valeurs de pH inférieures à 6 et réglage de la valeur du pH de la dispersion de polymère obtenue au-delà de 6, caractérisé en ce que, à titre de comonomères, on utilise, complémentairement aux monomères contenant des radicaux sulfonate, exclusivement un mélange constitué à chaque fois de 28 à 40% en poids, rapportés aux monomères totaux, de chlorure de vinyle, d'acétate de vinyle et d'acrylate de butyle et on opère la polymérisation en l'absence d'émulsifs non ioniques.

2. Utilisation des dispersions de polymères préparées selon la revendication 1 à titre de liants pour des peintures, des enduits et des bouche-pores ou mastics.